# EUROPEAN PATENT SPECIFICATION

(11) **EP 4 328 050 B1**
(45) Date of publication and mention of the grant of the patent: **18.09.2024**
(21) Application number: 23188567.4
(22) Date of filing: 31.07.2023
(51) Int. Cl.: B60C 19/00, B60C 5/14, B60C 9/04, B60C 9/20

(54) **TIRE**
REIFEN
PNEUMATIQUE

(30) Priority: 03.08.2022 JP 2022124060
(43) Date of publication of application: 28.02.2024
(73) Proprietor: Sumitomo Rubber Industries, Ltd., Kobe-shi, Hyogo 651-0072 (JP)
(72) Inventor: YOSHINO, Masayuki, Kobe-shi, 651-0072 (JP); TODOROKI, Daisuke, Kobe-shi, 651-0072 (JP)
(74) Representative: Manitz Finsterwald Patent- und Rechtsanwaltspartnerschaft mbB

(56) References cited:
- EP-A1- 3 798 020
- EP-A1- 4 019 292
- US-A1- 2004 134 578
- US-A1- 2005 217 774
- US-A1- 2006 164 250

## Description

### BACKGROUND OF THE INVENTION

### Field of the Invention

The present invention relates to a tire.

### Background Art

A tire is formed by combining a large number of components such as a tread and sidewalls. Some of these components are obtained by shaping a sheet-shaped member into a predetermined shape.

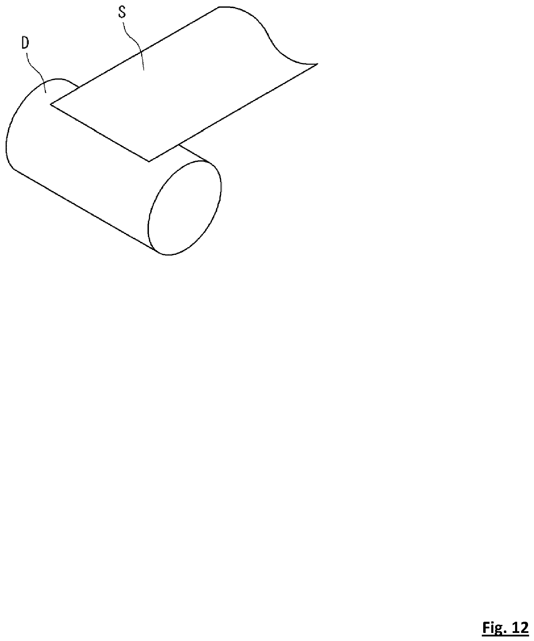

In forming such a component, a sheet-shaped member S is wound on a drum D as shown in FIG. 12, and both ends of the sheet-shaped member S are joined together. Accordingly, the sheet-shaped member S is processed into a tube shape. The component formed using the sheet-shaped member S includes a joint portion.

In order to manage data regarding manufacturing management, customer information, running history, etc., of tires, incorporation of radio frequency identification (RFID) tags into tires has been proposed. Various studies have been conducted for the technology to incorporate an RFID tag into a tire (for example, Japanese Laid-Open Patent Publication (translation of PCT application) No. 2013-530874).

The above-described joint portion is usually formed by overlapping both ends of the sheet-shaped member S. The joint portion is heavier than the other portions.

A tire includes a plurality of joint portions. If these joint portions are unevenly arranged, the uniformity of the tire is decreased.

An RFID tag has a certain weight. Therefore, when placing the RFID tag, it is necessary to consider the position of the RFID tag and the positions of the joint portions.

Some tire components are components including a steel cord (hereinafter, metal reinforcing components). If the RFID tag is placed near the joint portion of a metal reinforcing component, reading of data recorded in the RFID tag, etc., may be disturbed. When placing the RFID tag, it is also necessary to consider the influence of the RFID tag on readability.

A tire according to the preamble of claim 1 is disclosed in EP 4 019 292 Al. Further tires of related art are known from EP 3 798 020 Al and US 2005/217774 A1.

The present invention has been made in view of such circumstances. An object of the present invention is to provide a tire that can achieve improvement of readability of an RFID tag while suppressing the influence of the RFID tag on uniformity.

### SUMMARY OF THE INVENTION

A tire according to the present invention includes: a plurality of joined components each having a joint portion at a predetermined position in a circumferential direction; and an RFID tag. The plurality of joined components include an inner liner forming an inner surface of the tire, and at least one metal reinforcing component including a steel cord. The joint portion of the inner liner, the joint portion of the metal reinforcing component, and the RFID tag are placed so as to be dispersed in the circumferential direction. Positions of the joint portions of the joined components and a position of the RFID tag are represented by angles about a rotation axis of the tire, and when the position of the joint portion of the inner liner is defined as 0 degrees, the joint portion of the metal reinforcing component is located in a range of not less than 90 degrees and not greater than 270 degrees, and the RFID tag is located in a range of not less than 60 degrees and not greater than 90 degrees or a range of not less than 270 degrees and not greater than 300 degrees.

According to the present invention, a tire that can achieve improvement of readability of an RFID tag while suppressing the influence of the RFID tag on uniformity, is obtained.

### BRIEF DESCRIPTION OF THE DRAWINGS

FIG. 1 is a side view showing a heavy duty tire according to an embodiment of the present invention;
FIG. 2 is a cross-sectional view showing a part of a cross-section taken along a line II-II in FIG. 1;
FIG. 3 is a cross-sectional view showing a part of the cross-section in FIG. 2;
FIG. 4 is a plan view of a tag member;
FIG. 5 is a cross-sectional view taken along a line V-V in FIG. 4;
FIG. 6 is a schematic diagram showing an example of a joint portion of a joined component;
FIG. 7 is a schematic diagram showing a modification of the joint portion of the joined component;
FIG. 8 is a schematic diagram showing a modification of the joint portion of the joined component;
FIG. 9 is a schematic diagram illustrating how to specify the position in a circumferential direction of the joint portion;
FIG. 10 is a schematic diagram illustrating how to specify the position in the circumferential direction of the joint portion;
FIG. 11 is a side view illustrating the positions of an RFID tag and joint portions; and
FIG. 12 is a schematic diagram illustrating how to produce a joined component.

### DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section of the tire obtained by cutting the tire along a plane including the rotation axis of the tire. In this measurement, the tire is set such that the distance between right and left beads is made equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a rubber composition refers to a composition that is obtained by mixing a base rubber and chemicals in a kneading machine such as a Banbury mixer and that contains the uncrosslinked base rubber. A crosslinked rubber refers to a crosslinked product, of the rubber composition, obtained by pressurizing and heating the rubber composition. The crosslinked rubber contains a crosslinked product of the base rubber. The crosslinked rubber is also referred to as vulcanized rubber, and the rubber composition is also referred to as unvulcanized rubber.

In the present invention, a green tire is an uncrosslinked tire. The green tire is also referred to as raw cover. A tire is obtained by heating and pressurizing the green tire in a mold. The tire is a crosslinked molded product of the green tire.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

In the present invention, a complex elastic modulus of a component formed from a crosslinked rubber, of the components included in the tire, is measured according to the standards of JIS K6394. The measurement conditions are as follows.
Initial strain = 10%
Dynamic strain = ±1%
Frequency = 10 Hz
Mode = stretch mode
Temperature = 70°C

In this measurement, a test piece (a length of 40 mm × a width of 4 mm × a thickness of 1 mm) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the complex elastic modulus is represented as a complex elastic modulus at 70°C.

### [Outline of Embodiments of the Present Invention]

### [Configuration 1]

A tire according to an aspect of the present invention is a tire including: a plurality of joined components each having a joint portion at a predetermined position in a circumferential direction; and an RFID tag, wherein the plurality of joined components include an inner liner forming an inner surface of the tire, and at least one metal reinforcing component including a steel cord, the joint portion of the inner liner, the joint portion of the metal reinforcing component, and the RFID tag are placed so as to be dispersed in the circumferential direction, positions of the joint portions of the joined components and a position of the RFID tag are represented by angles about a rotation axis of the tire, and when the position of the joint portion of the inner liner is defined as 0 degrees, the joint portion of the metal reinforcing component is located in a range of not less than 90 degrees and not greater than 270 degrees, and the RFID tag is located in a range of not less than 60 degrees and not greater than 90 degrees or a range of not less than 270 degrees and not greater than 300 degrees.

By forming the tire as described above, a decrease in uniformity due to the placement of the RFID tag is effectively suppressed. Since the RFID tag is placed at a position distant from the position of the joint portion of the metal reinforcing component, the readability of the RFID tag is improved.

The tire can improve the readability of the RFID tag while suppressing the influence of the RFID tag on uniformity.

### [Configuration 2]

Preferably, in the tire described in [Configuration 1] above, a range from 0 degrees to 360 degrees is divided into four zones consisting of a first zone, a second zone, a third zone, and a fourth zone, in increments of 90 degrees about the rotation axis of the tire, (1) when the joint portion of the metal reinforcing component is located in the second zone, the RFID tag is located in the range of not less than 270 degrees and not greater than 300 degrees, and (2) when the joint portion of the metal reinforcing component is located in the third zone, the RFID tag is located in the range of not less than 60 degrees and not greater than 90 degrees.

By forming the tire as described above, the RFID tag is placed sufficiently away from the joint portion of the metal reinforcing component. The tire can achieve improvement of the readability of the RFID tag.

### [Configuration 3]

Preferably, the tire described in [Configuration 1] or [Configuration 2] above includes a carcass ply as the metal reinforcing component.

The tire can suppress the influence of the RFID tag on uniformity in consideration of the position of the joint portion of the carcass ply, and can improve the readability of the RFID tag.

### [Configuration 4]

Preferably, the tire described in any one of [Configuration 1] to [Configuration 3] above includes a steel reinforcing layer as the metal reinforcing component.

The tire can suppress the influence of the RFID tag on uniformity in consideration of the position of the joint portion of the steel reinforcing layer, and can improve the readability of the RFID tag.

### [Configuration 5]

Preferably, in the tire described in any one of [Configuration 1] to [Configuration 4] above, the RFID tag is located radially inward of a maximum width position of the tire.

The tire can improve the readability of the RFID tag while suppressing the influence of the RFID tag on uniformity in consideration of suppressing occurrence of damage to the RFID tag itself and damage due to the presence of the RFID tag.

### [Configuration 6]

Preferably, the tire described in any one of [Configuration 1] to [Configuration 5] above further includes: a pair of beads; a carcass extending on and between the pair of beads; a pair of sidewalls each located axially outward of the carcass; and a pair of chafers each located radially inward of the sidewall and configured to come into contact with a rim, each of the beads includes a core, an inner apex located radially outward of the core, and an outer apex located radially outward of the inner apex, the carcass includes a carcass ply, the carcass ply includes a ply body extending between the pair of beads, and a pair of turned-up portions each connected to the ply body and turned up at the bead, the RFID tag is in contact with the outer apex on a radially outer side of an end of the turned-up portion, and the RFID tag is located between an outer end of the outer apex and an outer end of the chafer in a radial direction.

### [Details of embodiments of the present invention]

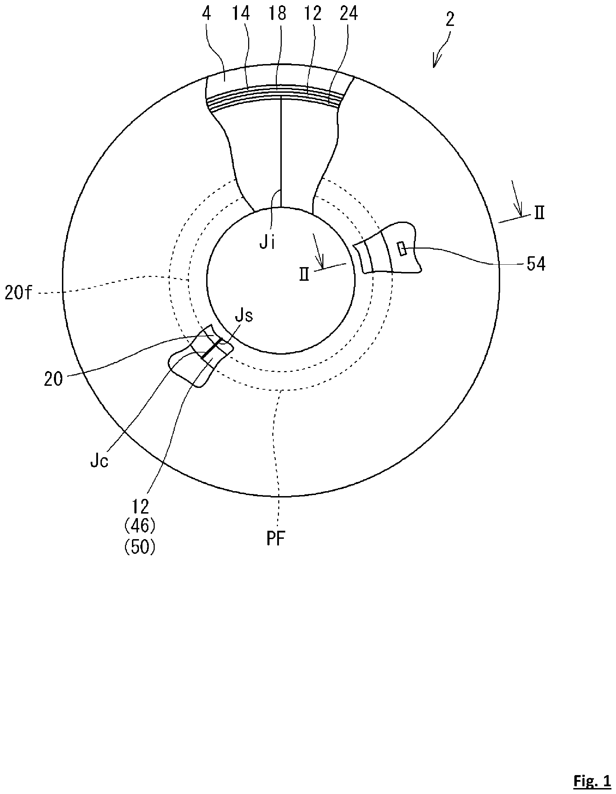

FIG. 1 shows a tire 2 according to an embodiment of the present invention. The tire 2 is mounted to a vehicle such as a truck and a bus. The tire 2 is also referred to as heavy duty tire. In FIG. 1, for convenience of description, the state of the interior of the partially cut-away tire 2 is shown.

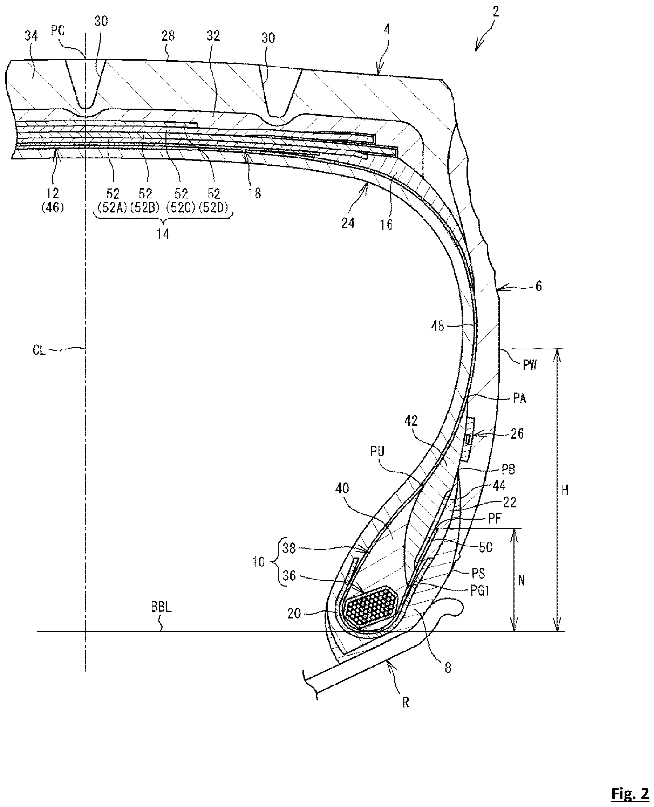

FIG. 2 shows a cross-section taken along a line II-II in FIG. 1. FIG. 2 shows a part of a cross-section (hereinafter, meridian cross-section) of the tire 2 along a plane including the rotation axis of the tire 2. In FIG. 2, the right-left direction is the axial direction of the tire 2, and the up-down direction is the radial direction of the tire 2. The direction perpendicular to the surface of the drawing sheet of FIG. 2 is the circumferential direction of the tire 2.

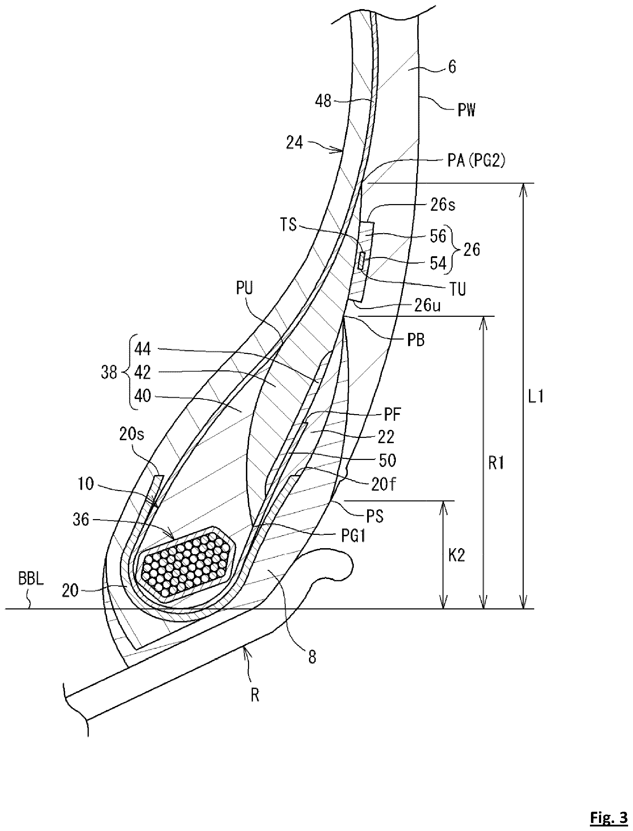

FIG. 3 shows a part of the cross-section shown in FIG. 2. FIG. 3 shows a bead portion of the tire 2.

In FIGS. 2 and 3, the tire 2 is fitted on a rim R (standardized rim).

In FIG. 2, an alternate long and short dash line CL extending in the radial direction represents the equator plane of the tire 2. In FIGS. 2 and 3, a solid line BBL extending in the axial direction is a bead base line. The bead base line BBL is a line that defines the rim diameter (see JATMA or the like) of the rim R.

The tire 2 includes a tread 4, a pair of sidewalls 6, a pair of chafers 8, a pair of beads 10, a carcass 12, a belt 14, a pair of cushion layers 16, a strip layer 18, a pair of steel reinforcing layers 20, a pair of interlayer strips 22, an inner liner 24, and a tag member 26.

The tread 4 is located radially outward of the carcass 12. The tread 4 comes into contact with a road surface at a tread surface 28 thereof. Grooves 30 are formed on the tread 4.

The tread 4 includes a base portion 32 and a cap portion 34 located radially outward of the base portion 32. The base portion 32 is formed from a crosslinked rubber that has low heat generation properties. The cap portion 34 is formed from a crosslinked rubber for which wear resistance and grip performance are taken into consideration. The cap portion 34 includes the tread surface 28. The tread 4 is formed using a sheet-shaped member including no cord (that is, a sheet-shaped member formed from a rubber composition).

In FIG. 1, a position indicated by reference character PC corresponds to an equator. The equator PC is the point of intersection of the tread surface 28 and the equator plane CL. In the case where the groove 30 is located on the equator plane CL as in the tire 2, the equator PC is specified on the basis of a virtual tread surface obtained on the assumption that the groove 30 is not present thereon.

The distance in the radial direction, from the bead base line BBL to the equator PC, obtained in the tire 2 in the standardized state is the cross-sectional height (see JATMA or the like) of the tire 2.

Each sidewall 6 is connected to an end of the tread 4. The sidewall 6 is located radially inward of the tread 4. The sidewall 6 is located axially outward of the carcass 12. A position indicated by reference character PS is an inner end of the sidewall 6. The sidewall 6 is formed from a crosslinked rubber for which cut resistance is taken into consideration. The complex elastic modulus of the sidewall 6 is not less than 2.0 MPa and not greater than 6.0 MPa. The sidewall 6 is formed using a sheet-shaped member including no cord.

A position indicated by reference character PW is an axially outer end (hereinafter, outer end PW) of the tire 2. In the case where decorations such as patterns and letters are present on the outer surface of the tire 2, the outer end PW is specified on the basis of a virtual outer surface obtained on the assumption that the decorations are not present thereon. The tire 2 has a maximum width at the outer end PW. The outer end PW is also referred to as maximum width position.

The distance in the axial direction from a first maximum width position PW to a second maximum width position PW in the tire 2 in the standardized state is the cross-sectional width (see JATMA or the like) of the tire 2.

In FIG. 2, a length indicated by reference character H is the distance in the radial direction from the bead base line BBL to the maximum width position PW. The distance H in the radial direction is also referred to as radial height of the maximum width position PW.

In the tire 2 in the standardized state, the ratio of the radial height H of the maximum width position PW to the cross-sectional height is not less than 0.40 and not greater than 0.60.

Each chafer 8 is located radially inward of the sidewall 6. The chafer 8 comes into contact with the rim R. A position indicated by reference character PB is an outer end of the chafer 8.

The chafer 8 is formed from a crosslinked rubber for which wear resistance is taken into consideration. The complex elastic modulus of the chafer 8 is not less than 10 MPa and not greater than 15 MPa. The chafer 8 is harder than the sidewall 6. The chafer 8 is formed using a sheet-shaped member including no cord.

In FIG. 3, a length indicated by reference character R1 is the distance in the radial direction from the bead base line BBL to the outer end PB of the chafer 8. The distance R1 in the radial direction is also referred to as radial height of the outer end PB of the chafer 8.

In FIG. 3, a length indicated by reference character K2 is the distance in the radial direction from the bead base line BBL to the inner end PS of the sidewall 6. The distance K2 in the radial direction is also referred to as radial height of the inner end PS of the sidewall 6.

In the tire 2, from the viewpoint of being able to ensure a sufficient joint region between the sidewall 6 and the chafer 8, the ratio (R1/K2) of the radial height R1 of the outer end PB of the chafer 8 to the radial height K2 of the inner end PS of the sidewall 6 is preferably not less than 2.00. From the viewpoint of ensuring the placement space for the tag member 26 described later, the ratio (R1/K2) is preferably not greater than 3.25.

Each bead 10 is located axially inward of the chafer 8. The bead 10 is located radially inward of the sidewall 6. The bead 10 has a ring shape. The bead 10 includes a core 36 and an apex 38.

The core 36 extends in the circumferential direction. The core 36 includes a wire made of steel and wound in the circumferential direction. The apex 38 is located radially outward of the core 36. The apex 38 extends radially outward from the core 36. The apex 38 is tapered outward. An outer end PA of the apex 38 is located radially inward of the maximum width position PW. The outer end PA of the apex 38 is located radially outward of the outer end PB of the chafer 8.

The apex 38 includes an inner apex 40 and an outer apex 42. The inner apex 40 is located radially outward of the core 36. The outer apex 42 is located radially outward of the inner apex 40.

The inner apex 40 is tapered outward. The inner apex 40 is formed from a hard crosslinked rubber. The complex elastic modulus of the inner apex 40 is not less than 60 MPa and not greater than 90 MPa.

The outer apex 42 is thick around an outer end PU of the inner apex 40. The outer apex 42 is tapered inward and tapered outward from the thick portion thereof.

An inner end PG1 of the outer apex 42 is located near the core 36.

In FIG. 3, a length indicated by reference character L1 is the distance in the radial direction from the bead base line BBL to an outer end PG2 of the outer apex 42. The distance L1 in the radial direction is also referred to as radial height of the outer end PG2 of the outer apex 42. The outer end PG2 of the outer apex 42 is also the outer end PA of the apex 38. The distance L1 in the radial direction is also referred to as radial height of the bead 10.

The outer apex 42 is formed from a crosslinked rubber. The outer apex 42 is more flexible than the inner apex 40. The complex elastic modulus of the outer apex 42 is not less than 3.0 MPa and not greater than 6.0 MPa.

In the tire 2, from the viewpoint of well-balancing the stiffness of the bead portion and the bending of the tire 2, the ratio (L1/H) of the radial height L1 of the bead 10 to the radial height H of the maximum width position PW is adjusted in the range of not less than 0.55 and not greater than 0.95.

In the tire 2, from the viewpoint of ensuring the placement space for the tag member 26 described later, the ratio (L1/R1) of the radial height L1 of the outer end PG2 of the outer apex 42 to the radial height R1 of the outer end PB of the chafer 8 is preferably not less than 1.08. From the viewpoint of being able to suppress the influence of the outer apex 42 on the bending of the tire 2, the ratio (L1/R1) is preferably not greater than 1.54.

The apex 38 of the tire 2 further includes an edge strip 44.

The edge strip 44 is located axially outward of the outer apex 42 and forms a part of the outer surface of the apex 38. The edge strip 44 is located between the outer end PB of the chafer 8 and the inner end PG1 of the outer apex 42 in the radial direction.

The edge strip 44 is formed from a crosslinked rubber. The edge strip 44 is more flexible than the chafer 8 and is harder than the outer apex 42. The complex elastic modulus of the edge strip 44 is not less than 7.0 MPa and not greater than 12 MPa.

The carcass 12 is located inward of the tread 4, the pair of sidewalls 6, and the pair of chafers 8. The carcass 12 extends on and between the pair of beads 10. The carcass 12 of the tire 2 has a radial structure.

The carcass 12 includes at least one carcass ply 46. The carcass 12 of the tire 2 is composed of one carcass ply 46. The carcass ply 46 is turned up around each bead 10.

The carcass ply 46 includes a ply body 48 and a pair of turned-up portions 50. The ply body 48 extends between the pair of beads 10, that is, between a first bead 10 and a second bead 10 (not shown). Each turned-up portion 50 is connected to the ply body 48 and turned up around the bead 10. The turned-up portion 50 of the tire 2 is turned up around the bead 10 from the inner side toward the outer side in the axial direction. The bead 10 is interposed between the ply body 48 and the turned-up portion 50. An end PF of the turned-up portion 50 is located radially inward of the outer end PB of the chafer 8. The end PF of the turned-up portion 50 overlaps the edge strip 44 in the axial direction.

The carcass ply 46 includes a large number of carcass cords aligned with each other, which are not shown. These carcass cords are covered with a topping rubber. Each carcass cord intersects the equator plane CL. The material of the carcass cords is steel. The carcass cords are steel cords. The carcass ply 46 is formed using a sheet-shaped member including a large number of steel cords aligned with each other.

In FIG. 2, a length indicated by reference character N is the distance in the radial direction from the bead base line BBL to the end PF of the turned-up portion 50. The distance N in the radial direction is also referred to as radial height of the end PF of the turned-up portion 50.

In the tire 2, the ratio (N/H) of the radial height N of the end PF of the turned-up portion 50 to the radial height H of the maximum width position PW is not less than 0.25 and not greater than 0.45.

The belt 14 is located between the tread 4 and the carcass 12 in the radial direction. The belt 14 includes four belt plies 52. The four belt plies 52 are a first belt ply 52A, a second belt ply 52B, a third belt ply 52C, and a fourth belt ply 52D. These belt plies 52 are aligned in the radial direction.

In the tire 2, among the four belt plies 52, the first belt ply 52A is located on the innermost side in the radial direction, the second belt ply 52B has a largest width, and the fourth belt ply 52D has a smallest width.

Each belt ply 52 includes a large number of belt cords aligned with each other, which are not shown. Each belt cord is tilted relative to the equator plane CL. The material of the belt cords is steel. The belt cords are steel cords. The belt ply 52 is formed using a sheet-shaped member including a large number of steel cords aligned with each other.

Each cushion layer 16 is located between the belt 14 and the carcass 12 at the end of the belt 14. The cushion layer 16 is formed from a flexible crosslinked rubber. The cushion layer 16 is formed using a sheet-shaped member including no cord.

The strip layer 18 is located between the carcass 12 and the belt 14 on the radially inner side of the tread 4. In the axial direction, the strip layer 18 is located between a first cushion layer 16 and a second cushion layer 16. The strip layer 18 is formed from a crosslinked rubber. The strip layer 18 is formed using a sheet-shaped member including no cord.

Each steel reinforcing layer 20 is located in the bead portion. The steel reinforcing layer 20 is located between the bead 10 and the chafer 8. The steel reinforcing layer 20 is located between the carcass 12 and the chafer 8. The steel reinforcing layer 20 is turned up around the bead 10. The steel reinforcing layer 20 is placed so as to wrap a radially inner portion of the bead 10 from the radially inner side of the turned-up portion 50. An inner end 20s and an outer end 20f of the steel reinforcing layer 20 are located between the end PF of the turned-up portion 50 and the core 36 in the radial direction.

The steel reinforcing layer 20 includes a large number of filler cords aligned with each other, which are not shown. The material of the filler cords is steel. The steel reinforcing layer 20 includes steel cords. In the steel reinforcing layer 20, the steel cords are covered with a topping rubber. The steel reinforcing layer 20 is formed using a sheet-shaped member including a large number of steel cords aligned with each other.

The outer end 20f of the steel reinforcing layer 20 is located between the turned-up portion 50 and the chafer 8 in the axial direction. The outer end 20f is located radially inward of the end PF of the turned-up portion 50. The inner end 20s is located between the inner liner 24 and the ply body 48 in the axial direction. It is sufficient that the position in the radial direction of the inner end 20s substantially coincides with that of the outer end 20f, and the inner end 20s may be located radially outward of the outer end 20f or may be located radially inward of the outer end 20f.

Each interlayer strip 22 is located between the chafer 8 and the apex 38 in the axial direction. The interlayer strip 22 covers the end PF of the turned-up portion 50 and the outer end 20f of the steel reinforcing layer 20. The end PF of the turned-up portion 50 is interposed between the interlayer strip 22 and the edge strip 44. The outer end 20f of the steel reinforcing layer 20 is interposed between the interlayer strip 22 and the chafer 8.

The interlayer strip 22 is formed from a crosslinked rubber. The interlayer strip 22 is harder than the sidewall 6 and is more flexible than the chafer 8. The complex elastic modulus of the interlayer strip 22 is not less than 7.0 MPa and not greater than 12 MPa. The interlayer strip 22 is formed using a sheet-shaped member including no cord.

The inner liner 24 is located inward of the carcass 12. The inner liner 24 is joined to the inner surface of the carcass 12 via an insulation (not shown) formed from a crosslinked rubber. The inner liner 24 forms an inner surface of the tire 2. The inner liner 24 is formed from a crosslinked rubber that has an excellent air blocking property. The inner liner 24 serves to maintain the internal pressure of the tire 2. The inner liner 24 is formed using a sheet-shaped member including no cord.

The tag member 26 is located axially outward of the bead 10. In the tire 2, the tag member 26 is provided only on the side of a first sidewall 6. The tag member 26 may be provided on each of the side of the first sidewall 6 and the side of a second sidewall 6. From the viewpoint of reducing the risk of damage, the tag member 26 is preferably provided on the side of the first sidewall 6 out of the pair of sidewalls 6.

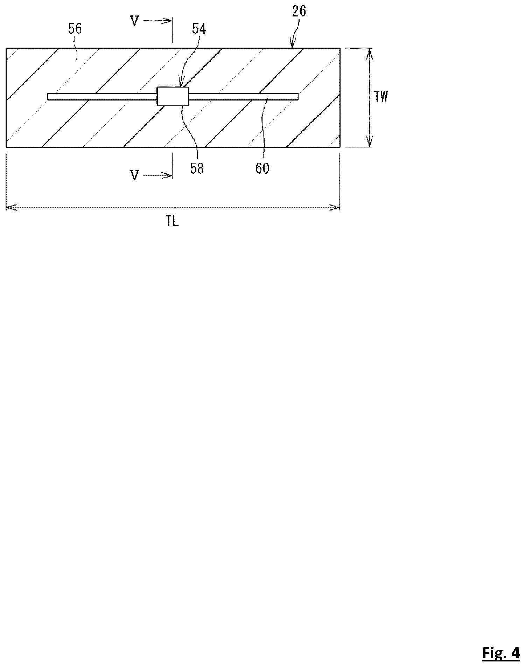

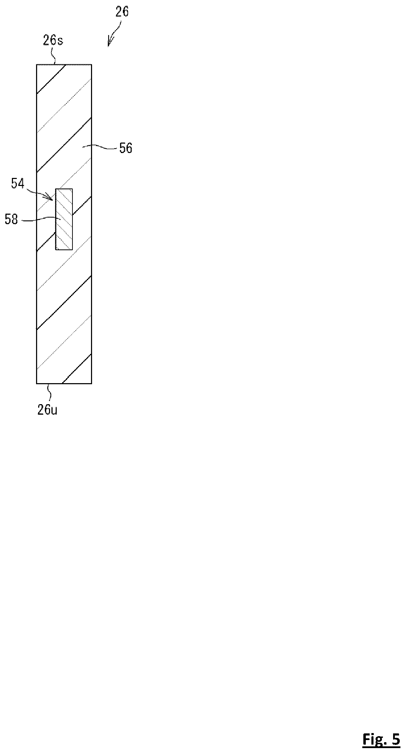

FIG. 4 is a plan view of the tag member 26. FIG. 5 is a cross-sectional view taken along a line V-V in FIG. 4.

The tag member 26 has a plate shape. The tag member 26 is long in a length direction thereof and short in a width direction thereof. As shown in FIG. 3, in the tire 2, the tag member 26 is placed such that a first end 26s in the width direction thereof is located on the radially outer side in the tire 2 and a second end 26u in the width direction thereof is located on the radially inner side in the tire 2. In the tire 2, the first end 26s is also referred to as outer end, and the second end 26u is also referred to as inner end.

The tag member 26 includes an RFID tag 54. In FIG. 4, for convenience of description, the RFID tag 54 is shown by a solid line, but the entirety thereof is covered with a protector 56. The tag member 26 includes the RFID tag 54 and the protector 56. The RFID tag 54 is located at the center of the tag member 26. The protector 56 is formed from a crosslinked rubber. The protector 56 has stiffness substantially equal to the stiffness of the outer apex 42. In the tire 2, formation of a good communication environment is considered, and a crosslinked rubber having high electrical resistance is used for the protector 56. The protector 56 is formed from a rubber that has high insulation properties.

Although not described in detail, the RFID tag 54 is a small and lightweight electronic component that includes: a semiconductor chip 58 obtained by making a transmitter/receiver circuit, a control circuit, a memory, etc., into a chip; and an antenna 60. Upon receiving interrogation radio waves, the RFID tag 54 uses the radio waves as electrical energy and transmits various data in the memory as response radio waves. The RFID tag 54 is a type of passive radio frequency identification transponder.

The tag member 26 is a plate-shaped member in which the RFID tag 54 is covered with a crosslinked rubber. From the viewpoint of reducing the risk of damage to the RFID tag 54 and forming a good communication environment, the thickness of the tag member 26 in the tire 2 is preferably not less than 1.0 mm and not greater than 2.5 mm. The thickness of the tag member 26 in the tire 2 is represented as the maximum thickness of the tag member 26 at the semiconductor chip 58 of the RFID tag 54.

A length TL of the tag member 26 before being embedded in the tire 2 is not less than 60 mm and not greater than 80 mm. A width TW thereof is not less than 10 mm and not greater than 20 mm.

In FIG. 3, a position indicated by reference character TU is a radially inner end of the RFID tag 54 (specifically, the semiconductor chip 58). A position indicated by reference character TS is a radially outer end of the semiconductor chip 58, that is, a radially outer end of the RFID tag 54.

In the present invention, the case where the inner end TU of the RFID tag 54 in the tire 2 is located radially outward of a position serving as a reference (hereinafter, reference position) is the case where the RFID tag 54 is located radially outward of the reference position. The case where the outer end TS of the RFID tag 54 in the tire 2 is located radially inward of the reference position is the case where the RFID tag 54 is located radially inward of the reference position.

In the tire 2, the RFID tag 54 is located radially inward of the maximum width position PW. Specifically, as shown in FIG. 3, in the meridian cross-section of the tire 2, the tag member 26 including the RFID tag 54 is placed as follows.

The tag member 26 is in contact with the apex 38 on the radially outer side of the end PF of the turned-up portion 50. The RFID tag 54 is located between the outer end PG2 of the outer apex 42 and the outer end PB of the chafer 8 in the radial direction. The outer end TS of the RFID tag 54 is located radially inward of the outer end PG2 of the outer apex 42. The inner end TU of the RFID tag 54 is located radially outward of the outer end PB of the chafer 8.

The outer end 26s of the tag member 26 is located radially inward of the outer end PG2 of the outer apex 42. The inner end 26u of the tag member 26 is located radially outward of the outer end PB of the chafer 8. Between the outer end PG2 of the outer apex 42 and the outer end PB of the chafer 8, the tag member 26 is interposed between the outer apex 42 and the sidewall 6.

The tire 2 can suppress concentration of strain on the RFID tag 54. The risk of damage to the RFID tag 54 can be reduced. The influence of the provision of the RFID tag 54 on the durability of the tire 2 is also suppressed.

The outer apex 42 is located between the carcass ply 46 and the RFID tag 54. The RFID tag 54 is placed so as to be spaced apart from the carcass ply 46 including the carcass cords which are metal components. Radio waves are less likely to be disturbed, so that a good communication environment is formed between the RFID tag 54 and a communication device (not shown). Writing of data to the RFID tag 54 and reading of data recorded in the RFID tag 54 are accurately performed.

The tire 2 can achieve improvement of the readability of the RFID tag 54 and reduction of the risk of damage to the RFID tag 54 while suppressing influence on durability. From this viewpoint, the RFID tag 54 is preferably located radially inward of the maximum width position PW. Specifically, preferably, the tag member 26 is in contact with the apex 38 on the radially outer side of the end PF of the turned-up portion 50, and the RFID tag 54 is located between the outer end PG2 of the outer apex 42 and the outer end PB of the chafer 8 in the radial direction. In this case, more preferably, the outer end TS of the RFID tag 54 is located radially inward of the outer end PG2 of the outer apex 42, and the inner end TU of the RFID tag 54 is located radially outward of the outer end PB of the chafer 8. Further preferably, the outer end 26s of the tag member 26 is located radially inward of the outer end PG2 of the outer apex 42, and the inner end 26u of the tag member 26 is located radially outward of the outer end PB of the chafer 8. Particularly preferably, between the outer end PG2 of the outer apex 42 and the outer end PB of the chafer 8, the tag member 26 is interposed between the outer apex 42 and the sidewall 6.

Although not described in detail, the tire 2 described above is obtained by pressurizing and heating a green tire in a mold. The green tire is formed by combining a large number of components such as a tread and sidewalls. These components include components each formed using a sheet-shaped member. For such a component, a sheet-shaped member is processed into a tubular shape by winding the sheet-shaped member on a drum and joining both ends of the sheet-shaped member together. The components each formed using a sheet-shaped member include joint portions. In the present invention, a component having a joint portion is also referred to as joined component.

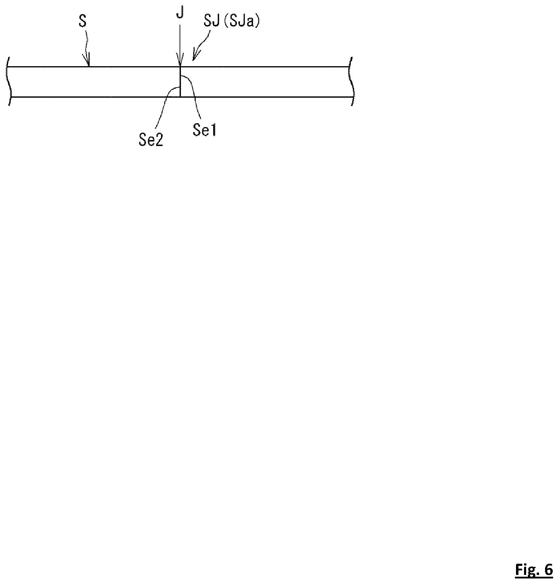

FIGS. 6 to 8 show examples of a joint portion SJ of a joined component. As for the form of the joint portion SJ, there are three types, for example.

A joint portion SJa shown in FIG. 6 is formed by butting a first end Se1 and a second end Se2 of a sheet-shaped member S together. The first end Se1 and the second end Se2 are formed by surfaces perpendicular to the length direction of the sheet-shaped member S, and thus a position J of the joint portion SJa is represented by the position of a joint surface formed by butting the first end Se1 and the second end Se2 together.

In the joint portion SJa shown in FIG. 6, when the tire 2 expands, the joint portion SJa may be stretched and become lighter than the other portions.

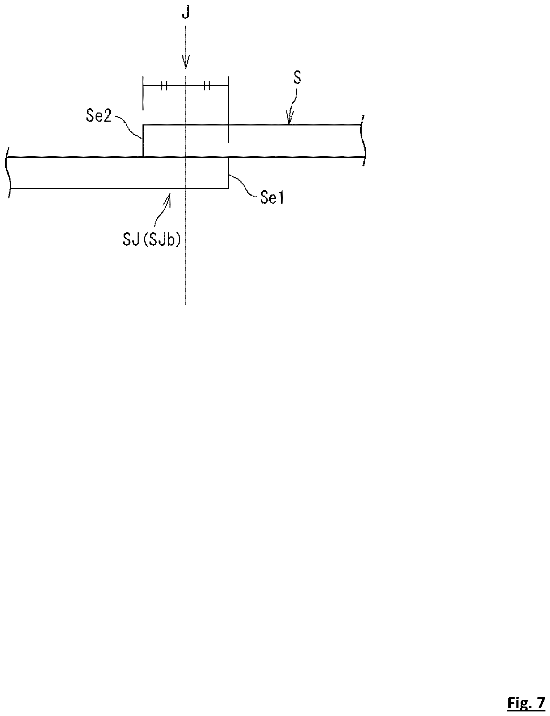

A joint portion SJb shown in FIG. 7 is formed by overlapping the first end Se1 and the second end Se2 of the sheet-shaped member S. In this case, the center position of the length from the first end Se1 to the second end Se2 is specified as a position J of the joint portion SJb. The joint portion SJb shown in FIG. 7 is heavier than the other portions.

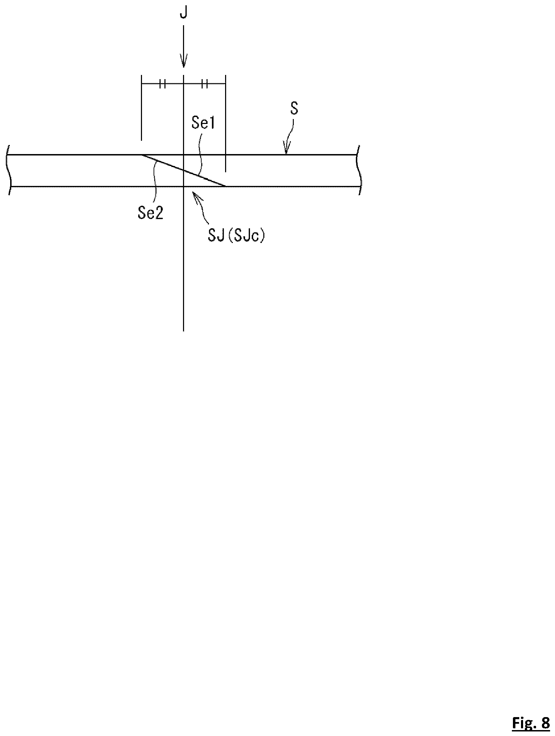

Similar to the joint portion SJa shown in FIG. 6, a joint portion SJc shown in FIG. 8 is also formed by butting the first end Se1 and the second end Se2 of the sheet-shaped member S together. However, the first end Se1 and the second end Se2 are formed by slopes inclined relative to the length direction of the sheet-shaped member S, and thus, as shown in FIG. 8, the center position of the length from the first end to the second end of a joint surface formed by butting the first end Se1 and the second end Se2 together is specified as a position J of the joint portion SJc.

In the joint portion SJc shown in FIG. 8, when the tire 2 expands, the joint portion SJc may be stretched and become lighter than the other portions.

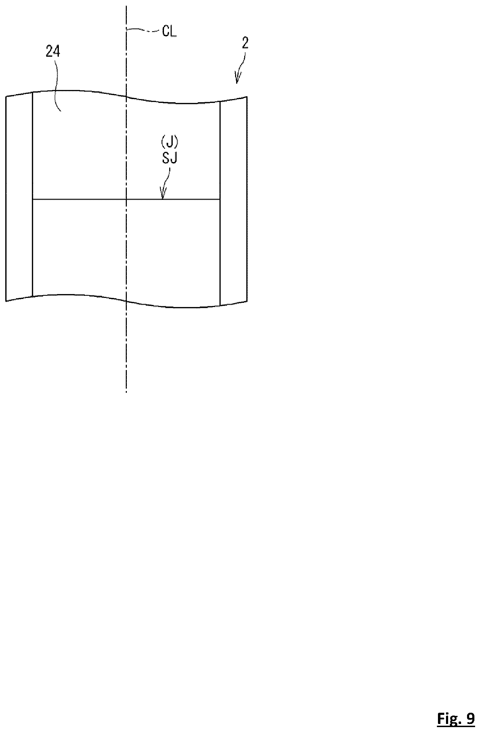

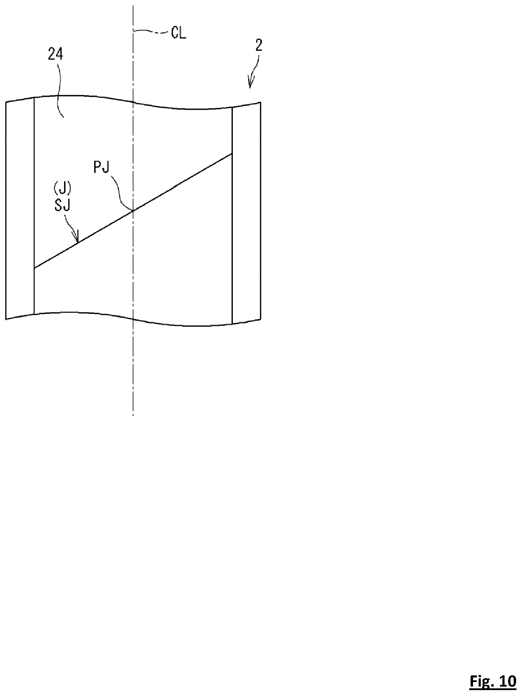

FIG. 9 and FIG. 10 each show the inner surface of the tire 2 viewed from the bead portion side. In each of FIG. 9 and FIG. 10, the position J of the joint portion SJ specified in the inner liner 24 is shown as an example of the joint portion SJ.

FIG. 9 shows the case where the position J of the joint portion SJ is along the radial direction and the axial direction. In this case, the position in the circumferential direction of the joint portion SJ is represented by the position in the circumferential direction of a line representing the position J.

FIG. 10 shows the case where the position J of the joint portion SJ is inclined relative to the radial direction. In this case, the position in the circumferential direction of the joint portion SJ is represented by the position in the circumferential direction of the point of intersection (position indicated by reference character PJ in FIG. 10) of the equator plane CL and a line representing the position J.

As described above, the inner liner 24 serves to maintain the internal pressure of the tire 2. In the inner liner 24, from the viewpoint of preventing air leakage at the joint portion, both ends of a sheet-shaped member are sufficiently overlapped. In the inner liner 24, a joint portion SJ of the same type as shown in FIG. 7 is formed.

In addition to the inner liner 24, for example, the tread 4, the sidewalls 6, the carcass ply 46 of the carcass 12, the belt plies 52 of the belt 14, the cushion layers 16, and the steel reinforcing layers 20 are joined components.

The tire 2 includes a plurality of joined components each having a joint portion. Among the plurality of joined components, the carcass ply 46, the belt plies 52, and the steel reinforcing layers 20 include steel cords. In the present invention, a joined component including a steel cord is also referred to as metal reinforcing component. The carcass ply 46, the belt plies 52, and the steel reinforcing layers 20 are metal reinforcing components.

In FIG. 1, a position indicated by a solid line Ji is the position of the joint portion of the inner liner 24. A position indicated by a solid line Jc is the position of the joint portion of the carcass ply 46. A position indicated by reference character Js is the position of the joint portion of the steel reinforcing layer 20.

In the tire 2, the joint portion of the carcass ply 46 and the joint portion of the steel reinforcing layer 20 are placed at the same position in the circumferential direction. The joint portion of the carcass ply 46 and the joint portion of the steel reinforcing layer 20 may be placed at different positions in the circumferential direction.

In the tire 2, joint portions whose number is equal to the number of joined components exist. If the joint portions are unevenly arranged in the circumferential direction, the uniformity of the tire 2 is decreased. Therefore, in consideration of the influence on uniformity, all the joint portions are placed at predetermined positions in the circumferential direction.

If the RFID tag 54 is located near the joint portion of any metal reinforcing component, the readability of the RFID tag 54 is decreased. To ensure the readability of the RFID tag 54 while maintaining good uniformity, it is necessary to place the RFID tag 54 at an appropriate position relative to the joint portion of the metal reinforcing component.

As described above, the belt 14 is one of the metal reinforcing components. In the tire 2, the belt 14 is located radially outward of the maximum width position PW. Since the RFID tag 54 is located radially inward of the maximum width position PW, the influence of the joint portion of each belt ply 52 included in the belt 14, on the readability of the RFID tag 54, is small. Therefore, when setting the positions of the joint portions of the joined components in consideration of the readability of the RFID tag 54, the position of the joint portion of any metal reinforcing component located radially inward of the maximum width position PW is taken into consideration, and the position of the joint portion of any metal reinforcing component located radially outward of the maximum width position PW is not taken into consideration.

The tire 2 includes the carcass ply 46, the belt plies 52, and the steel reinforcing layers 20 as the metal reinforcing components. Among the carcass ply 46, the belt plies 52, and the steel reinforcing layers 20, the carcass ply 46 and the steel reinforcing layers 20 are the metal reinforcing components located radially inward of the maximum width position PW, and the belt plies 52 are the metal reinforcing components located radially outward of the maximum width position PW.

The plurality of joined components of the tire 2 include the inner liner 24 and at least one metal reinforcing component. The joint portion of the inner liner 24, the joint portion of the metal reinforcing component, and the RFID tag 54 are not placed at the same position in the circumferential direction. In other words, the joint portion of the inner liner 24, the joint portion of the metal reinforcing component, and the RFID tag 54 are placed so as to be dispersed in the circumferential direction.

In the tire 2, the influence of the joint portion of the inner liner 24, the joint portion of the metal reinforcing component, and the RFID tag 54 on the uniformity is suppressed.

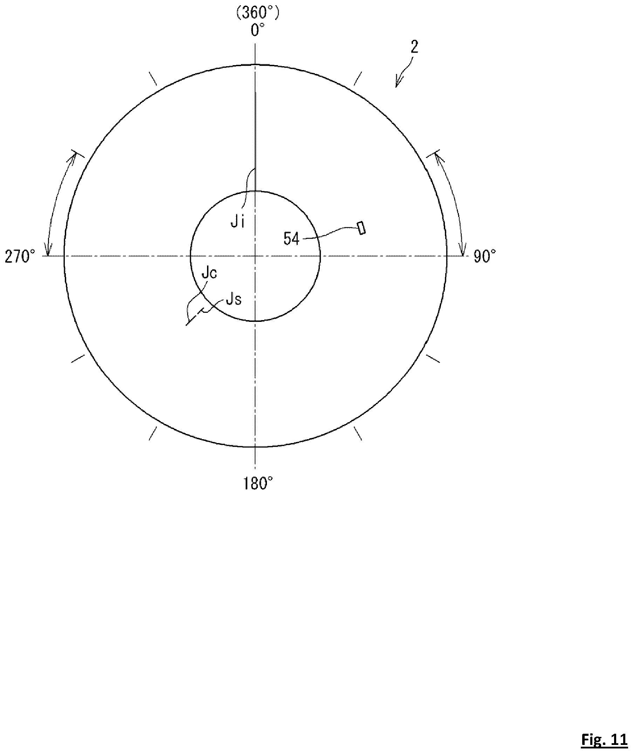

FIG. 11 is a side view of the tire 2. The positions in the circumferential direction of the joint portion of each joined component and the RFID tag 54 will be described with reference to FIG. 11. For convenience of description, the RFID tag 54, a position Ji of the joint portion of the inner liner 24, a position Jc of the joint portion of the carcass ply 46, and a position Js of the joint portion of the steel reinforcing layer 20 which do not appear on the outer surface of the tire 2 are indicated by solid lines.

The RFID tag 54 has a length in the circumferential direction. Therefore, the position of the RFID tag 54 is represented by the position of the center of the RFID tag 54 in the circumferential direction.

In the present invention, the positions of the joint portions of the joined components and the position of the RFID tag 54 are represented by angles about the rotation axis of the tire 2. The position Ji of the joint portion of the inner liner 24 is defined as 0 degrees, and the position of the joint portion of each joined component is represented as a position relative to the position Ji of the joint portion of the inner liner 24.

In FIG. 11, the position of the joint portion of the carcass ply 46 and the position of the joint portion of the steel reinforcing layer 20 are both 225 degrees, but the joint portion of the carcass ply 46 and the joint portion of the steel reinforcing layer 20, that is, the joint portion of the metal reinforcing component, is placed in the range of not less than 90 degrees and not greater than 270 degrees. In FIG. 11, the position of the RFID tag 54 is 75 degrees, but the RFID tag 54 is placed in the range of not less than 60 degrees and not greater than 90 degrees or the range of not less than 270 degrees and not greater than 300 degrees.

In other words, in the tire 2, when the position of the joint portion of the inner liner 24 is defined as 0 degrees, the joint portion of the metal reinforcing component is located in the range of not less than 90 degrees and not greater than 270 degrees, and the RFID tag 54 is placed in the range of not less than 60 degrees and not greater than 90 degrees or the range of not less than 270 degrees and not greater than 300 degrees.

In the tire 2, in particular, a decrease in uniformity due to the placement of the RFID tag 54 is effectively suppressed. Since the RFID tag 54 is placed at a position distant from the position of the joint portion of the metal reinforcing component, the readability of the RFID tag 54 is improved.

The tire 2 can improve the readability of the RFID tag 54 while suppressing the influence of the RFID tag 54 on uniformity.

As described above, in the tire 2, from the viewpoint of being able to achieve improvement of the readability of the RFID tag 54 and reduction of the risk of damage to the RFID tag 54 while suppressing influence on durability, the RFID tag 54 is preferably placed radially inward of the maximum width position PW. More preferably, the tag member 26 is in contact with the apex 38 on the radially outer side of the end PF of the turned-up portion 50, and the RFID tag 54 is placed between the outer end PG2 of the outer apex 42 and the outer end PB of the chafer 8 in the radial direction. This placement of the RFID tag 54 in the meridian cross-section of the tire 2 can contribute to further improvement of the readability of the RFID tag 54.

Therefore, from the viewpoint of being able to achieve further improvement of the readability of the RFID tag 54 while suppressing the influence of the RFID tag 54 on uniformity, in the tire 2 in which the tag member 26 is in contact with the apex 38 on the radially outer side of the end PF of the turned-up portion 50 and the RFID tag 54 is located between the outer end PG2 of the outer apex 42 and the outer end PB of the chafer 8 in the radial direction, when the position of the joint portion of the inner liner 24 is defined as 0 degrees, preferably, the joint portion of the metal reinforcing component is placed in the range of not less than 90 degrees and not greater than 270 degrees, and the RFID tag 54 is placed in the range of not less than 60 degrees and not greater than 90 degrees or the range of not less than 270 degrees and not greater than 300 degrees.

In the present invention, the range from 0 degrees to 360 degrees is divided into four zones consisting of a first zone, a second zone, a third zone, and a fourth zone, in increments of 90 degrees about the rotation axis of the tire 2. The zone from 0 degrees to 90 degrees is the first zone, the zone from 90 degrees to 180 degrees is the second zone, the zone from 180 degrees to 270 degrees is the third zone, and the zone from 270 degrees to 360 degrees is the fourth zone. When a joint portion (or the RFID tag 54) is located at any boundary between zones, it is interpreted as being located in the respective zones. The position of a joint portion being 90 degrees represents that the joint portion is located in both the first zone and the second zone.

In FIG. 11, the joint portion of the metal reinforcing component is located in the third zone in the range of not less than 90 degrees and not greater than 270 degrees, and the RFID tag 54 is located in the first zone, specifically, in the range of not less than 60 degrees and not greater than 90 degrees.

Accordingly, the RFID tag 54 is placed sufficiently away from the joint portion of the metal reinforcing component. The tire 2 can achieve improvement of the readability of the RFID tag 54. From this viewpoint, when the joint portion of the metal reinforcing component is located in the third zone, the RFID tag 54 is preferably located in the range of not less than 60 degrees and not greater than 90 degrees. From the same viewpoint, when the joint portion of the metal reinforcing component is located in the second zone, the RFID tag 54 is preferably located in the range of not less than 270 degrees and not greater than 300 degrees.

As described above, in the tire 2, the RFID tag 54 can be placed in the range of not less than 60 degrees and not greater than 90 degrees.

From the viewpoint of being able to improve the readability of the RFID tag 54 while suppressing the influence of the RFID tag 54 on uniformity, the RFID tag 54 is preferably placed in the range of not less than 65 degrees and not greater than 85 degrees, and more preferably placed in the range of not less than 70 degrees and not greater than 80 degrees.

When the RFID tag 54 is placed in the range of not less than 65 degrees and not greater than 85 degrees, or when the RFID tag 54 is placed in the range of not less than 70 degrees and not greater than 80 degrees, the joint portion of the metal reinforcing component is further preferably located in the third zone.

As described above, in the tire 2, the RFID tag 54 can be placed in the range of not less than 270 degrees and not greater than 300 degrees. In this case as well, from the viewpoint of being able to improve the readability of the RFID tag 54 while suppressing the influence of the RFID tag 54 on uniformity, the RFID tag 54 is preferably placed in the range of not less than 275 degrees and not greater than 295 degrees, and more preferably placed in the range of not less than 280 degrees and not greater than 290 degrees.

When the RFID tag 54 is placed in the range of not less than 275 degrees and not greater than 295 degrees, or when the RFID tag 54 is placed in the range of not less than 280 degrees and not greater than 290 degrees, the joint portion of the metal reinforcing component is further preferably located in the second zone.

As is obvious from the above description, according to the present invention, the tire 2 that can achieve improvement of the readability of the RFID tag 54 while suppressing the influence of the RFID tag 54 on uniformity, is obtained. The present invention exhibits a remarkable effect in a heavy duty tire mounted to a vehicle such as a truck and a bus.

### EXAMPLES

Hereinafter, the present invention will be described in further detail by means of an example, etc., but the present invention is not limited to the example, but only to the appended claims.

### [Example 1 and Comparative Examples 1 and 2]

Heavy duty tires (tire size = 275/80R22.5) having the basic structure shown in FIGS. 1 to 3 and having specifications shown in Table 1 below were obtained.

When the position of the joint portion of the inner liner was defined as 0 degrees, the positions of the joint portions of the carcass ply and the steel reinforcing layers were set to 225 degrees.

In Example 1, the RFID tag was placed at a position of 75 degrees.

Comparative Examples 1 and 2 were set in the same manner as Example 1, except that the position in the circumferential direction of the RFID tag was set as shown in Table 1 below.

### [Readability of RFID Tag]

A test tire was fitted onto a rim (size = 22.5×7.50) and inflated with air to adjust the internal pressure of the tire to a standardized internal pressure. The reception intensity of radio waves emitted from the RFID tag was measured using a reading device. The reception intensity is ranked in order of higher reception intensity. The ranking is shown in Table 1 below. The smaller the value is, the better the readability of the RFID tag is.

### [Uniformity]

A test tire was fitted onto a rim (size = 22.5×7.50) and inflated with air to adjust the internal pressure of the tire to a standardized internal pressure. The test tire was mounted to a balance tester, and dynamic balance was measured. Based on the measured values, the dynamic balance was ranked in order of smaller dynamic balance. The ranking is shown in Table 1 below. The smaller the value is, the better the uniformity is.

**[Table 1]**

| | Example 1 | Comparative Example 1 | Comparative Example 2 |
|---|---|---|---|
| Position of RFID [degrees] | 75 | 180 | 15 |
| Readability | 1 | 3 | 2 |
| Uniformity | 1 | 2 | 3 |

As shown in Table 1, it is confirmed that, in Example 1, the influence of the RFID tag on uniformity is suppressed and the readability of the RFID tag is improved. From the evaluation results, advantages of the present invention are clear.

The above-described technology capable of achieving improvement of the readability of an RFID tag while suppressing the influence of the RFID tag on uniformity can be applied to various tires.

## Claims

1. A tire (2) comprising:
a plurality of joined components each having a joint portion at a predetermined position in a circumferential direction; and
an RFID tag (54), wherein
the plurality of joined components include an inner liner (24) forming an inner surface of the tire (2), and at least one metal reinforcing component including a steel cord,
the joint portion of the inner liner (24), the joint portion of the metal reinforcing component, and the RFID tag (54) are placed so as to be dispersed in the circumferential direction,
positions (Ji, Jc, Js) of the joint portions of the joined components and a position of the RFID tag (54) are represented by angles about a rotation axis of the tire (2), and the tire is **characterized in that**
when the position (Ji) of the joint portion of the inner liner (24) is defined as 0 degrees, the joint portion of the metal reinforcing component is located in a range of not less than 90 degrees and not greater than 270 degrees, and the RFID tag (54) is located in a range of not less than 60 degrees and not greater than 90 degrees or a range of not less than 270 degrees and not greater than 300 degrees.

2. The tire (2) according to claim 1, wherein
a range from 0 degrees to 360 degrees is divided into four zones consisting of a first zone, a second zone, a third zone, and a fourth zone, in increments of 90 degrees about the rotation axis of the tire (2),
when the joint portion of the metal reinforcing component is located in the second zone, the RFID tag (54) is located in the range of not less than 270 degrees and not greater than 300 degrees, and
when the joint portion of the metal reinforcing component is located in the third zone, the RFID tag (54) is located in the range of not less than 60 degrees and not greater than 90 degrees.

3. The tire (2) according to claim 1 or 2, wherein the tire (2) includes a carcass ply (46) as the metal reinforcing component.

4. The tire (2) according to claim 1 or 2, wherein the tire (2) includes a steel reinforcing layer (20) as the metal reinforcing component.

5. The tire (2) according to claim 1 or 2, wherein the RFID tag (54) is located radially inward of a maximum width position (PW) of the tire (2).

6. The tire (2) according to claim 5, further comprising:
a pair of beads (10);
a carcass (12) extending on and between the pair of beads (10);
a pair of sidewalls (6) each located axially outward of the carcass (12); and
a pair of chafers (8) each located radially inward of the sidewall (6) and configured to come into contact with a rim (R), wherein
each of the beads (10) includes a core (36), an inner apex (40) located radially outward of the core (36), and an outer apex (42) located radially outward of the inner apex (40),
the carcass (12) includes a carcass ply (46),
the carcass ply (46) includes a ply body (48) extending between the pair of beads (10), and a pair of turned-up portions (50) each connected to the ply body (48) and turned up at the bead (10),
the RFID tag (54) is in contact with the outer apex (42) on a radially outer side of an end (PF) of the turned-up portion (50), and
the RFID tag (54) is located between an outer end (PG2) of the outer apex (42) and an outer end (PB) of the chafer (8) in a radial direction.

## Patentansprüche

1. Reifen (2), umfassend:
eine Vielzahl von verbundenen Komponenten, die jeweils einen Verbindungsabschnitt an einer vorbestimmten Position in einer Umfangsrichtung aufweisen; und
ein RFID-Etikett (54), wobei
die Vielzahl von verbundenen Komponenten einen Innerliner (24), der eine Innenfläche des Reifens (2) bildet, und mindestens eine Metallverstärkungskomponente, die einen Stahlkord enthält, umfassen,
der Verbindungsabschnitt des Innerliners (24), der Verbindungsabschnitt der Metallverstärkungskomponente und das RFID-Etikett (54) so angeordnet sind, dass sie in der Umfangsrichtung verteilt sind,
Positionen (Ji, Jc, Js) der Verbindungsabschnitte der verbundenen Komponenten und eine Position des RFID-Etiketts (54) durch Winkel um eine Drehachse des Reifens (2) dargestellt sind, und
der Reifen **dadurch gekennzeichnet ist, dass**
wenn die Position (Ji) des Verbindungsabschnitts des Innerliners (24) als 0 Grad definiert ist, der Verbindungsabschnitt der Metallverstärkungskomponente in einem Bereich von nicht weniger als 90 Grad und nicht mehr als 270 Grad angeordnet ist und das RFID-Etikett (54) in einem Bereich von nicht weniger als 60 Grad und nicht mehr als 90 Grad oder in einem Bereich von nicht weniger als 270 Grad und nicht mehr als 300 Grad angeordnet ist.

2. Reifen (2) nach Anspruch 1, wobei
ein Bereich von 0 Grad bis 360 Grad in vier Zonen, die aus einer ersten Zone, einer zweiten Zone, einer dritten Zone und einer vierten Zone bestehen, in Inkrementen von 90 Grad um die Drehachse des Reifens (2) herum unterteilt ist,
wenn der Verbindungsabschnitt der Metallverstärkungskomponente in der zweiten Zone angeordnet ist, das RFID-Etikett (54) in dem Bereich von nicht weniger als 270 Grad und nicht mehr als 300 Grad angeordnet ist, und
wenn der Verbindungsabschnitt der Metallverstärkungskomponente in der dritten Zone angeordnet ist, das RFID-Etikett (54) in dem Bereich von nicht weniger als 60 Grad und nicht mehr als 90 Grad angeordnet ist.

3. Reifen (2) nach Anspruch 1 oder 2, wobei der Reifen (2) eine Karkasslage (46) als die Metallverstärkungskomponente umfasst.

4. Reifen (2) nach Anspruch 1 oder 2, wobei der Reifen (2) eine Stahlverstärkungsschicht (20) als die Metallverstärkungskomponente umfasst.

5. Reifen (2) nach Anspruch 1 oder 2, wobei das RFID-Etikett (54) radial innen von einer Position maximaler Breite (PW) des Reifens (2) angeordnet ist.

6. Reifen (2) nach Anspruch 5, ferner umfassend:
ein Paar Wülste (10);
eine Karkasse (12), die sich auf und zwischen dem Paar Wülsten (10) erstreckt;
ein Paar Seitenwände (6), die jeweils axial außen von der Karkasse (12) angeordnet sind; und
ein Paar Wulstbänder (8), die jeweils radial innen von der Seitenwand (6) angeordnet sind und konfiguriert sind, um mit einer Felge (R) in Kontakt zu kommen, wobei
jeder der Wülste (10) einen Kern (36), einen inneren Kernreiter (40), der radial außen von dem Kern (36) angeordnet ist, und einen äußeren Kernreiter (42), der radial außen von dem inneren Kernreiter (40) angeordnet ist, umfasst,
die Karkasse (12) eine Karkasslage (46) umfasst,
die Karkasslage (46) einen Lagenkörper (48), der sich zwischen dem Paar Wülsten (10) erstreckt, und ein Paar Umschlagabschnitte (50), die jeweils mit dem Lagenkörper (48) verbunden sind und an dem Wulst (10) umgeschlagen sind, umfasst,
das RFID-Etikett (54) mit dem äußeren Kernreiter (42) auf einer radial äußeren Seite eines Endes (PF) des Umschlagabschnitts (50) in Kontakt ist, und
das RFID-Etikett (54) zwischen einem äußeren Ende (PG2) des äußeren Kernreiters (42) und einem äußeren Ende (PB) des Wulstbandes (8) in einer radialen Richtung angeordnet ist.

## Revendications

1. Pneumatique (2) comprenant :
une pluralité de composants joints, chacun ayant une portion de jonction à une position prédéterminée dans une direction circonférentielle ; et
une étiquette RFID (54), dans lequel
la pluralité de composants joints incluent une doublure intérieure (24) formant une surface intérieure du pneumatique (2), et au moins un composant de renforcement métallique incluant un câblé en acier,
la portion de jonction de la doublure intérieure (24), la portion de jonction du composant de renforcement métallique, et l'étiquette RFID (54) sont placés de manière à être dispersés dans la direction circonférentielle,
des positions (Ji, Jc, Js) des portions de jonction des composants joints et une position de l'étiquette RFID (54) sont représentées par des angles autour d'un axe de rotation du pneumatique (2), et
le pneumatique est **caractérisé en ce que**
quand la position (Ji) de la portion de jonction de la doublure intérieure (24) est définie comme étant 0 degré, la portion de jonction du composant de renforcement métallique est située dans une plage qui n'est pas inférieure à 90 degrés et qui n'est pas supérieure à 270 degrés, et l'étiquette RFID (54) est située dans une plage qui n'est pas inférieure à 60 degrés et qui n'est pas supérieure à 90 degrés ou dans une plage qui n'est pas inférieure à 270 degrés et qui n'est pas supérieure à 300 degrés.

2. Pneumatique (2) selon la revendication 1, dans lequel
une plage allant de 0 degré à 360 degrés est divisée en quatre zones composée d'une première zone, d'une deuxième zone, d'une troisième zone et d'une quatrième zone, par incréments de 90 degrés autour de l'axe de rotation du pneumatique (2),
quand la portion de jonction du composant de renforcement métallique est située dans la deuxième zone, l'étiquette RFID (54) est située dans la plage qui n'est pas inférieure à 270 degrés et qui n'est pas supérieure à 300 degrés, et
quand la portion de jonction du composant de renforcement métallique est située dans la troisième zone, l'étiquette RFID (54) est située dans la plage qui n'est pas inférieure à 60 degrés et qui n'est pas supérieure à 90 degrés.

3. Pneumatique (2) selon la revendication 1 ou 2, dans lequel le pneumatique (2) inclut une nappe de carcasse (46) en tant que composant de renforcement métallique.

4. Pneumatique (2) selon la revendication 1 ou 2, dans lequel le pneumatique (2) inclut une couche de renforcement en acier (20) en tant que composant de renforcement métallique.

5. Pneumatique (2) selon la revendication 1 ou 2, dans lequel l'étiquette RFID (54) est située radialement à l'intérieur d'une position de largeur maximum (PW) du pneumatique (2).

6. Pneumatique (2) selon la revendication 5, comprenant en outre :
une paire de talons (10) ;
une carcasse (12) s'étendant sur et entre la paire de talons (10) ;
une paire de parois latérales (6), chacune étant située axialement à l'extérieur de la carcasse (12) ; et
une paire de bandelettes de talon (8), chacune étant située radialement à l'intérieur de la paroi latérale (10) et étant configurée pour venir en contact avec une jante (R), dans lequel
chacun des talons (10) inclut une âme (36), un sommet intérieur (40) situé radialement à l'extérieur de l'âme (36), et un sommet extérieur (42) situé radialement à l'extérieur du sommet intérieur (40),
la carcasse (12) inclut une nappe de carcasse (46),
la nappe de carcasse (46) inclut un corps de nappe (48) s'étendant entre la paire de talons (10), et une paire de portions retroussées (50), chacune étant connectée au corps de nappe (48) et étant retroussée au niveau du talon (10),
l'étiquette RFID (54) est en contact avec le sommet extérieur (42) sur un côté radialement extérieur d'une extrémité (PF) de la portion retroussée (50), et l'étiquette RFID (54) est située entre une extrémité extérieure (PG2) du sommet extérieur (42) et une extrémité extérieure (PB) de la bandelette de talon (8) dans une direction radiale.
